# EUROPEAN PATENT APPLICATION

(11) **EP 3 392 102 A1**
(43) Date of publication of application: **24.10.2018**
(21) Application number: 16875175.8
(22) Date of filing: 06.09.2016
(51) Int. Cl.: B60S 5/06, B60K 1/04, B62B 3/10, B62B 5/06

(54) **BATTERY-EQUIPPED CART AND BATTERY-DRIVEN DEVICE**

(30) Priority: 18.12.2015 JP 2015246819
(71) Applicant: Nagano Industry Co., Ltd., Chikuma-shi, Nagano 387-8561 (JP)
(72) Inventor: ARAI, Kenji, Chikuma-shi Nagano 387-8561 (JP); OBINATA, Shigeru, Chikuma-shi Nagano 387-8561 (JP); GOZU, Eiji, Chikuma-shi Nagano 387-8561 (JP); TODOROKI, Kiyoshi, Chikuma-shi Nagano 387-8561 (JP); YUMOTO, Seiichi, Chikuma-shi Nagano 387-8561 (JP)
(74) Representative: Addiss, John William
(86) International application number: PCT/JP2016/076114
(87) International publication number: WO 2017/104189

(57) **Abstract**

An object is to provide a technology capable of easily mounting a battery into a battery-driven machine. A solution is a battery-equipped carriage (12) which is loaded into or unloaded from a storage (20) in a battery-driven machine (14). The battery-equipped carriage (12) includes: a chassis (24); and a front wheel caster (26) and a rear wheel caster (28) which respectively support a front part and a rear part of the chassis (24) with respect to a ground (G). Here, the front part of the chassis (24) is positioned to be higher than the rear part of the chassis (24) with respect to the ground (G) such that the chassis (24) is inclined.

## Description

### Technical Field

The present invention relates to a technology which is effectively applied to a battery-equipped carriage and a battery-driven machine.

### Background Art

JP-A-2005-289181 (PTL 1) discloses a technology related to a battery mounting structure for a battery-driven shovel.

### Citation List

### Patent Literature

PTL 1: JP-A-2005-289181

### Summary of Invention

### Technical Problem

Battery-driven machines driven by a battery include work vehicles such as an aerial work vehicle, a forklift, and a farm machine, and construction machines exemplified by a shovel and a bulldozer. Such vehicles are mounted with a battery for supplying electric power to a driving electric motor. In addition, there are vehicles mounted with a battery as a starter driving or control power source. In recent years, there are also vehicles that use engine drive and battery drive together for traveling and driving.

As an example of a battery mounted in the battery-driven machine, there may be a battery unit having rollers and wheels as disclosed in PTL 1 (particularly, see paragraph [0021]). This battery unit may be moved to a battery-driven machine by means of the wheels. However, in the case of the battery unit, it is necessary to lift up the battery unit until it is possible to insert and couple the rollers into recessed grooves at the battery-driven machine side when the battery unit is mounted in the battery-driven machine. As a result, there is a problem in that the battery unit cannot be easily mounted in the battery-driven machine.

An object of the present invention is to provide a technology of easily mounting a battery in a battery-driven machine. The above-described object, other objects, and novel features of the present invention will be apparent from the description in the present specification and the accompanying drawings.

### Solution to Problem

An outline of a representative invention among the inventions disclosed herein may be briefly described as follows. A battery-equipped carriage according to an exemplary embodiment of the present invention is a battery-equipped carriage which is loaded into or unloaded from a storage in a battery-driven machine. The battery-equipped carriage includes: a chassis; and a front wheel and a rear wheel which respectively support a front part and a rear part of the chassis with respect to the ground, in which the front part of the chassis is positioned to be higher than the rear part of the chassis with respect to the ground such that the chassis is inclined.

### Advantageous Effects of Invention

An effect obtained by a representative invention among the inventions disclosed herein will be briefly described below. According to the battery-equipped carriage according to the exemplary embodiment of the present invention, it is possible to easily mount the battery in the battery-driven machine.

### Brief Description of Drawings

Fig. 1 is a schematic side view of a battery-equipped carriage.
Fig. 2 is a schematic top plan view of the battery-equipped carriage.
Fig. 3 is a schematic perspective view of the battery-equipped carriage.
Fig. 4 is a schematic top plan view of a main part of a battery-driven machine.
Fig. 5 is a schematic front view of the main part of the battery-driven machine.
Fig. 6 is a schematic perspective view of the battery-equipped carriage and the battery-driven machine.
Fig. 7 is a schematic side view of the battery-equipped carriage mounted in the battery-driven machine.
Fig. 8 is a view for explaining a wheel advancing and retracting mechanism provided in the battery-equipped carriage.
Figs. 9A and 9B are explanatory views of a locking unit provided in the battery-equipped carriage, in which Fig. 9A illustrates a locked state, and Fig. 9B illustrates an unlocked state.
Figs. 10A and 10B are explanatory views of the locking unit provided in the battery-equipped carriage, in which Fig. 10A illustrates a locked state, and Fig. 10B illustrates an unlocked state.
Fig. 11 is an explanatory view illustrating the operation of the battery-equipped carriage.
Fig. 12 is an explanatory view illustrating the operation of the battery-equipped carriage, which is subsequent to Fig. 11.
Fig. 13 is an explanatory view illustrating the operation of the battery-equipped carriage, which is subsequent to Fig. 12.
Fig. 14 is an explanatory view illustrating the operation of the battery-equipped carriage, which is subsequent to Fig. 13.
Fig. 15 is an explanatory view illustrating the operation of the battery-equipped carriage, which is subsequent to Fig. 14.
Fig. 16 is an explanatory view illustrating the operation of the battery-equipped carriage, which is subsequent to Fig. 15.
Fig. 17 is an explanatory view illustrating the operation of the battery-equipped carriage, which is subsequent to Fig. 16.
Fig. 18 is an explanatory view illustrating the operation of the battery-equipped carriage, which is subsequent to Fig. 17.
Fig. 19 is an explanatory view illustrating the operation of the battery-equipped carriage, which is subsequent to Fig. 18.
Fig. 20 is an explanatory view illustrating the operation of the battery-equipped carriage, which is subsequent to Fig. 19.

### Description of Embodiments

Hereinafter, an exemplary embodiment of the present invention will be descried by dividing it into multiple sections, as necessary. However, in principle, the multiple sections are not irrelevant to each other, but one of them is in the relationship of a modification, details, or the like of the entirety or a part of another section. For this reason, members having the same function are denoted by the same reference numerals in all of the drawings, and repeated descriptions thereof will be omitted. In addition, unless particularly stated or explicitly limited to a particular number in principle, the number of constituent elements (including number, values, amount, range, etc.) is not limited to a particular number, and may be equal to, more than, or less than a specific number. In addition, when descriptions are made with respect to a shape of a constituent element, unless particularly stated or explicitly not considered as such in principle, it is intended that the shape of the constituent element includes shapes substantially approximate or similar to the shape.

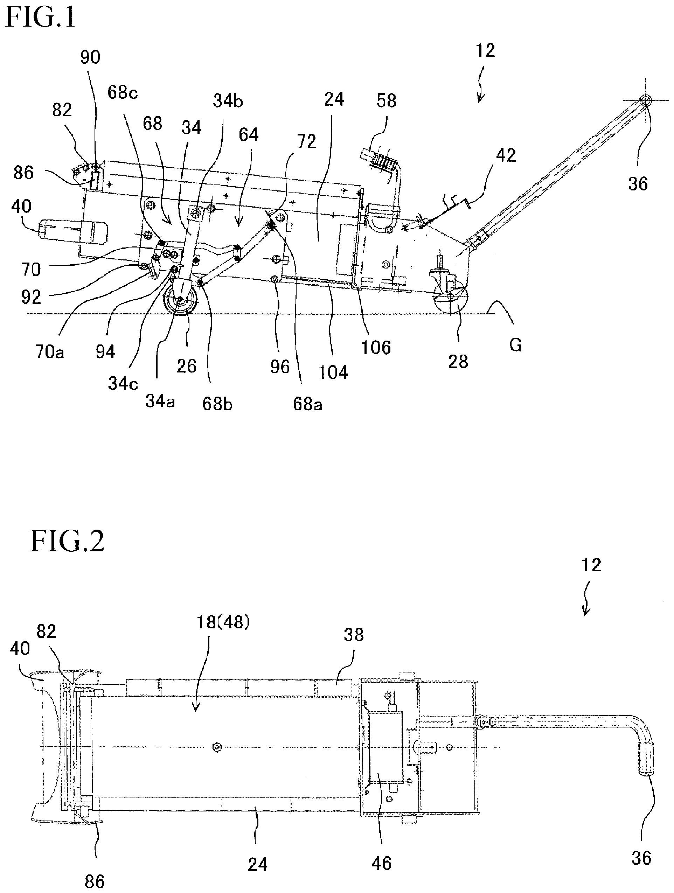

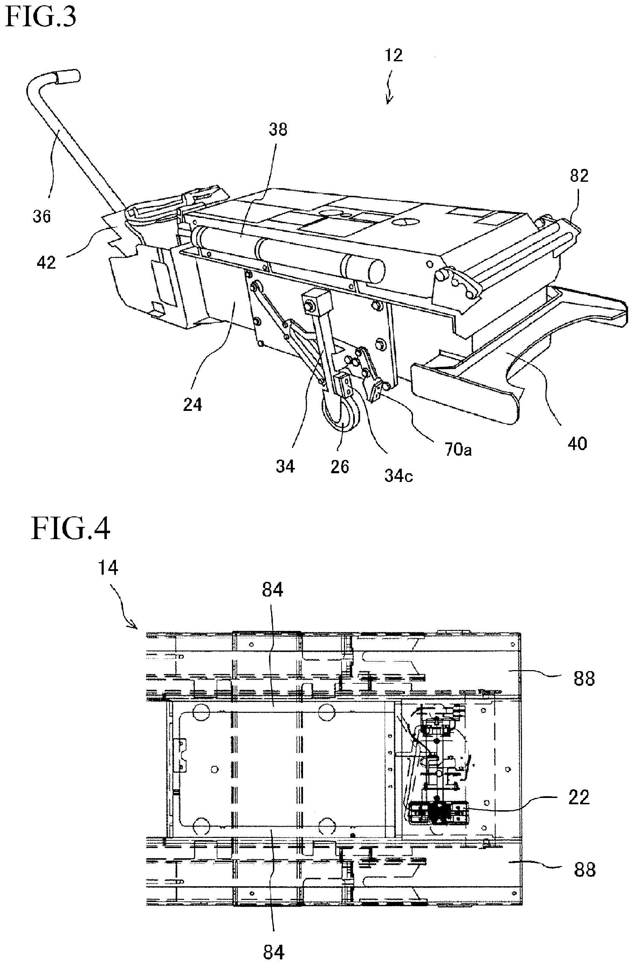

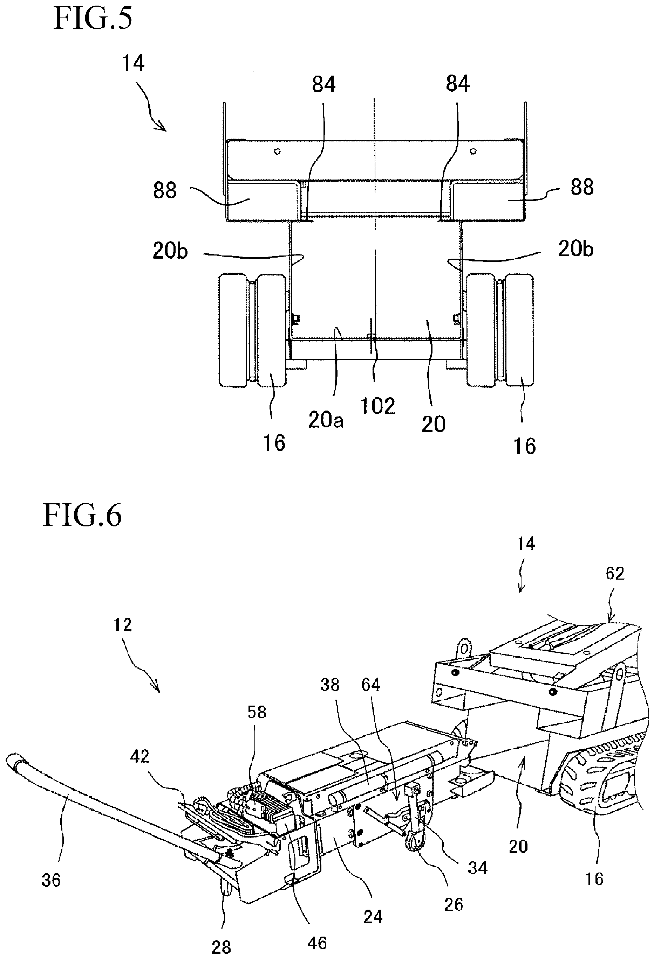

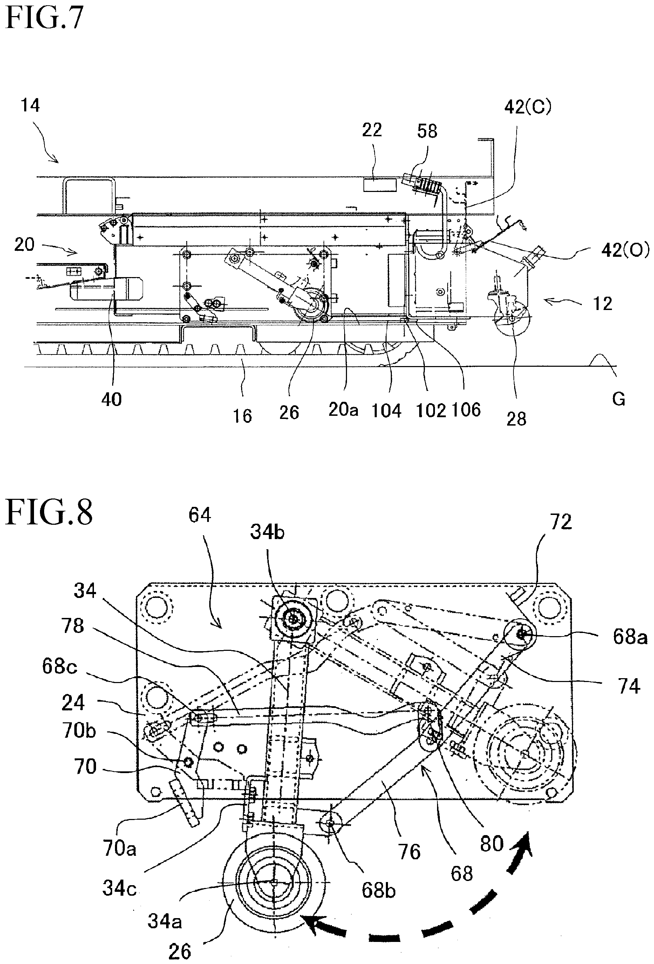

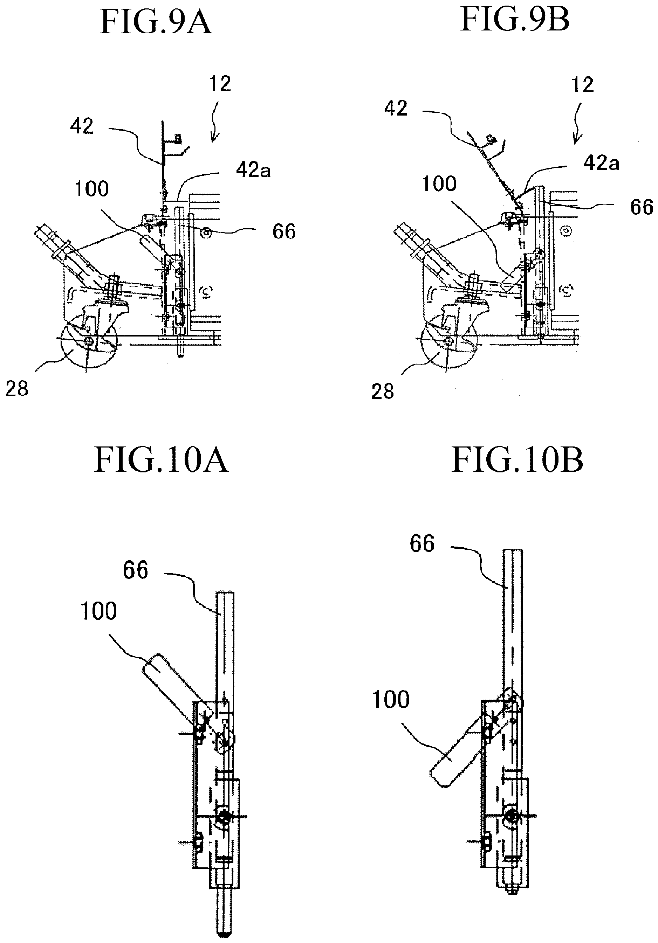

A battery-equipped carriage 12 and a battery-driven machine 14 according to an exemplary embodiment of the present invention will be described with reference to the drawings. Fig. 1 is a schematic side view of the battery-equipped carriage 12. Fig. 2 is a schematic top plan view of the battery-equipped carriage 12. Fig. 3 is a schematic perspective view of the battery-equipped carriage 12. Fig. 4 is a schematic top plan view of a main part of the battery-driven machine 14. Fig. 5 is a schematic front view of the main part of the battery-driven machine 14. Fig. 6 is a schematic perspective view of the battery-equipped carriage 12 and the battery-driven machine 14. Fig. 7 is a schematic side view of the battery-equipped carriage 12 mounted in the battery-driven machine 14. In addition, Fig. 8 is an explanatory view illustrating a wheel advancing and retracting mechanism 64 provided in the battery-equipped carriage 12. Figs. 9A, 9B, 10A, and 10B are explanatory views illustrating a locking unit 66 provided in the battery-equipped carriage 12, in which Figs. 9A and 10A illustrate a locked state, and Figs. 9B and 10B illustrate an unlocked state.

The battery-equipped carriage 12 according to the exemplary embodiment of the present invention is provided with a battery unit 18 to which a battery 48 is connected (there may be provided a single battery 48 or multiple batteries 48, and the multiple batteries 48 may be configured to be connected directly or in parallel), and the battery-equipped carriage 12 is a carriage that is loaded into or unloaded from a storage 20 in the battery-driven machine 14 which is a mother machine (see Fig. 6). The battery-equipped carriage 12 is provided with a chassis 24 in which the battery unit 18 is mounted, and front wheel casters 26 and a rear wheel caster 28 which respectively support the front part and the rear part of the chassis 24. Further, a side directed toward the storage 20 (front side) of the battery-driven machine 14 when the battery-equipped carriage 12 is loaded is defined as the front part of the battery-equipped carriage 12 (chassis 24), and a side (rear side) opposite to the front side is defined as the rear part.

The number of front wheel casters 26 is two, and the front wheel casters 26 support the chassis 24 through rods (legs) 34 that extend to the ground G from the opposite sides of the front part of the chassis 24, respectively. In addition, the number of rear wheel casters 28 is one, and the rear wheel caster supports the center of the rear part of the chassis 24. Because the number of rear wheel caster 28 is one, the battery-equipped carriage 12, which is lifted up using the rear wheel caster 28 as a support point, may be easily positioned when the battery-equipped carriage 12 is loaded into (get into) the battery-driven machine 14. Further, in the present exemplary embodiment, the rear wheel caster 28 is configured to be pivotable, but the front wheel casters 26 are configured to be stationary such that the battery-equipped carriage 12 is rectilinearly moved back and forth. In addition, the front wheel casters 26 and the rear wheel caster 28 have the same diameter.

In addition, the battery-equipped carriage 12 is provided with a detachable handle 36 (Fig. 2 illustrates a state in which the detachable handle 36 is removed) at the rear part of the chassis 24, and a handle accommodating section 38 which is provided on a side part of the chassis 24 and accommodates the handle 36 removed from the chassis 24. In the state in which the handle 36 is mounted on the chassis 24, the handle 36 is used when an operator drives the battery-equipped carriage 12, or loads/unloads the battery-equipped carriage 12 into/from the battery-driven machine 14. In addition, since the handle accommodating section 38 is provided, the removed handle 36 may also be accommodated when the battery-equipped carriage 12 is mounted (loaded) into the storage 20 of the battery-driven machine 14. Further, the battery-equipped carriage 12 may not be provided with the handle 36 when the battery-equipped carriage 12 is capable of automatically traveling by wireless communication or the like.

In addition, the battery-equipped carriage 12 is provided with a charger 46 for charging the battery unit 18. For example, the charger 46 is mounted on the chassis 24 adjacent to the battery unit 18. Since the battery-equipped carriage 12 includes the charger 46 as well, it is possible to easily charge the battery unit 18.

The battery-driven machine 14 (see Fig. 6) according to the exemplary embodiment of the present invention is a vehicle (for example, an aerial work vehicle) which is provided with a lifting mechanism 62 and a crawler 16 as a traveling mechanism (the traveling mechanism may be a tire or the like without being limited to the crawler), and driven by being supplied with power from the battery-equipped carriage 12. For this reason, the battery-driven machine 14 is provided with the storage 20 into/from which the battery-equipped carriage 12 is loaded/unloaded, and the battery unit 18 (battery 48) is mounted as the battery-equipped carriage 12 is loaded into the storage. In addition, the battery-driven machine 14 is provided with an electric component (not illustrated) such as an electric motor, and an electric outlet 22 (illustrated in perspective in Fig. 4) electrically connected to the electric component. By the way, the battery-equipped carriage 12 is provided with a plug 58 electrically connected to the battery unit 18. For this reason, the battery-equipped carriage 12 and the battery-driven machine 14 are electrically connected through the electric outlet 22 and the plug 58 in the state in which the battery-equipped carriage 12 is loaded into the storage 20.

The storage 20 (Figs. 6 and 7) is provided at a position, which does not come into contact with the ground G (i.e., a position higher than the ground G) such that the storage 20 does not hinder the traveling operation of the battery-driven machine 14. Here, for example, it is also considered that a slope (not illustrated) is provided on the storage 20 in order to load the battery-equipped carriage 12 into the battery-driven machine 14. However, because the battery-equipped carriage 12 is comparatively heavy in weight, there is concern that the battery-equipped carriage 12 cannot travel smoothly on the slope.

Therefore, the battery-equipped carriage 12 according to the present exemplary embodiment is configured such that the front part of the chassis 24 is positioned to be higher than the rear part of the chassis 24, thereby causing the chassis 24 to be inclined with respect to the ground G. Specifically, in the front wheel caster 26 and the rear wheel casters 28 which are in contact with the ground G, the front wheel caster 26 is mounted on a rod 34 to be spaced away from the chassis 24 such that the chassis 24 is inclined. In addition, the chassis 24 is inclined such that the lower surface of the front part of the chassis 24 is higher from the ground G than a floor surface 20a of the storage 20 in order to ensure that the chassis 24 is easily mounted on the floor surface 20a (bottom surface) of the storage 20. For this reason, the battery-equipped carriage 12 can be easily mounted on the battery-driven machine 14 even though the storage 20 is positioned at a position higher than the ground G. In particular, the battery-equipped carriage 12 can be easily mounted on the battery-driven machine 14 even though the height between the battery-equipped carriage 12 and the battery-driven machine 14 varies according to a situation of a road surface.

By the way, it is considered that the front wheel caster 26 may be removed from the chassis 24 because the front wheel caster 26 is spaced apart from the ground G when the front part of the chassis 24 is mounted on the floor surface 20a of the storage 20 during the loading. However, there is concern that it is laborious to remove the front wheel caster 26.

Therefore, the battery-equipped carriage 12 according to the present exemplary embodiment is provided with the wheel advancing and retracting mechanism 64 which retracts (stores) the front wheel caster 26 into the chassis 24 when the battery-equipped carriage 12 is loaded into the storage 20 of the battery-driven machine 14, and advances the front wheel caster 26 from the chassis 24 when the battery-equipped carriage 12 is unloaded from the storage 20 of the battery-driven machine 14 (causes the front wheel caster 26 to protrude from the chassis 24). The wheel advancing and retracting mechanism 64 is provided with the rod 34 (a leg of the front wheel caster 26), a link unit 68, a switching lever 70, and a torsion spring 72.

In the wheel advancing and retracting mechanism 64 (see Fig. 8), the rod 34 has a first end 34a and a second end 34b, and the link unit 68 has a third end 68a, a fourth end 68b, and a fifth end 68c. In addition, in the wheel advancing and retracting mechanism 64, the first end 34a of the rod 34 is mounted on the front wheel caster 26. In addition, the second end 34b of the rod 34 is rotatably mounted on the chassis 24. In addition, the central portion 70b of the switching lever 70 is rotatably mounted at the lower side of the front part of the chassis 24 from the second end 34b of the rod 34. In addition, in the wheel advancing and retracting mechanism 64, the switching lever 70 has a first contact portion 70a (lower end), and the rod 34 has a second contact portion 34c. As will be described below, the first contact portion 70a and the second contact portion 34c come into contact with an edge of the floor surface (an end portion of the floor) of the storage 20 in the order of the first contact portion 70a and the second contact portion 34c while the battery-equipped carriage 12 is loaded.

In addition, the third end 68a of the link unit 68 is rotatably mounted on the rear side of the chassis 24 from the second end 34b of the rod 34. In addition, the fourth end 68b of the link unit 68 is rotatably mounted on the first end 34a of the rod 34. The fifth end 68c of the link unit 68 is rotatably mounted on the switching lever 70 (upper end). The link unit 68 is provided with arm units 74, 76, 78, and 80 the ends of which are rotatably mounted. One end of the arm unit 74 is the third end 68a, one end of the arm unit 76 is the fourth end 68b, and one end of the arm unit 78 is the fifth end 68c. One end of the arm unit 80 is rotatably connected to the other end of the arm unit 74 and the other end of the arm unit 76. In addition, the other end of the arm unit 80 is rotatably connected to the other end of the arm unit 78.

Further, in the wheel advancing and retracting mechanism 64, the torsion spring 72 is provided at a position at which the third end 68a of the link unit 68 is mounted, and the torsion spring 72 is disposed between the chassis 24 and the link unit 68 (arm unit 74) so as to bias the link unit 68 toward the rear side of the chassis 24 with respect to the chassis 24. With the use of the torsion spring 72, at the time of loading and unloading the battery-equipped carriage 12, the advancing and retracting (extension and accommodation) of the front wheel caster 26 with respect to the chassis 24 can be automatically performed. Further, in Fig. 8, a state in which the front wheel caster 26 is advanced is indicated by a solid line, and a state in which the front wheel caster 26 is retracted is indicated by a broken line.

According to the wheel advancing and retracting mechanism 64, the rod 34 may be provided so as to be rotated in a plane parallel to a side surface of the chassis 24. For this reason, when the battery-equipped carriage 12 is unloaded (travels), the rod 34 protrudes from the chassis 24, and the front wheel caster 26 is advanced so as to come into contact with the ground G. Meanwhile, when the battery-equipped carriage 12 is loaded into the battery-driven machine 14, the rod 34 is positioned at the side surface side of the chassis 24, and the front wheel caster 26 is retracted so as not to be in contact with the ground G.

In addition, the battery-equipped carriage 12 is provided with a bumper 40 (see Figs. 2 and 3) such that the battery-equipped carriage 12 is positioned and loaded into the storage 20 of the battery-driven machine 14. The bumper 40 protrudes from the opposite sides of the chassis 24, and is provided to be narrow from the opposite sides toward a foremost portion (a width of a tip is decreased in a plan view). In this regard, the width (in a horizontal plan view) of the storage 20 into/from which the battery-equipped carriage 12 is loaded/unloaded (the width between the inner surfaces 20b of the storage 20 illustrated in Fig. 5) is slightly larger than the width (in a horizontal plan view) of the bumper 40 of the battery-equipped carriage 12. In addition, the battery-driven machine 14 is provided with a stop unit 102 (e.g., a projection in the form of a cylindrical rod) at a center of a front side (opening side) of the bottom surface 20a of the storage 20 (see Figs. 5 and 7). In addition, outside the bottom surface of the chassis 24, the battery-equipped carriage 12 is provided with guide rails 104 which are positioned at left and right sides of the stop unit 102 to extend in a direction in which the battery-equipped carriage 12 is loaded/unloaded, and a stopper plate 106 which is positioned at the rear side of the battery-equipped carriage 12 from the rails 104 to be in contact with the stop unit 102.

For this reason, when the battery-equipped carriage 12 is loaded, the narrow tip portion of the bumper 40 enters the storage 20, and subsequently, the protruding wide opposite sides of the bumper 40 enters the storage 20. In this case, the battery-equipped carriage 12 is positioned in the storage 20 as the bumper 40 comes into contact with the inner surfaces 20b of the storage 20 or is separated from the inner surfaces 20b of the storage 20. In addition, even if the battery-equipped carriage 12 sways leftward and rightward, the left and right guide rails 104 come into contact with the stop unit 102, thereby inhibiting the swaying of the battery-equipped carriage 12. Further, the battery-equipped carriage 12 is stopped in the storage 20 when the stopper plate 106 comes into contact with the stop unit 102.

In addition, the battery-equipped carriage 12 is provided with guard sliders (86, 86) (see Figs. 1 and 2) provided at the opposite sides of the chassis 24 at a lower part from an upper bumper 82. In this regard, the battery-driven machine 14 includes upper guides (88, 88) (see Figs. 4 and 5), which are respectively provided at the opposite sides of the upper part of the storage 20. The upper guides (88, 88) are provided to protrude from the inner surfaces 20b of the storage 20. In addition, a space is formed between the upper guides (88, 88), and the space is included in the space of the storage 20. For this reason, even if the operator loads the battery-equipped carriage 12 in the state where the chassis 24 is excessively inclined when loading the battery-equipped carriage 12, the chassis 24 of which is inclined such that the front part of the chassis 24 is positioned to be higher than the rear part of the chassis 24, the guard sliders 86 come into contact with the upper guides 88, and the chassis 24 is guided such that the chassis 24 can be loaded into the storage 20.

In addition, the battery-equipped carriage 12 includes the upper bumper 82 (see Figs. 1 and 3) which is provided in the front upper part of the chassis 24 and inclined downward from the upper side to the front side. In this regard, the battery-driven machine 14 includes guide plates 84 (see Figs. 4 and 5) which protrude horizontally by a predetermined width from the inner surfaces 20b (upper guides (88, 88)) in the upper part of the inner side of the storage 20. For this reason, when loading the battery-equipped carriage 12 of which the front part of the chassis 24 is positioned to be higher than the rear part of the chassis 24 such that the chassis 24 is inclined, even if the upper bumper 82 is about to move upward, the upper bumper 82 comes into contact with the guide plates 84 such that the chassis 24 is guided so that the chassis 24 can be loaded into the storage 20.

In addition, the battery-equipped carriage 12 includes an upper roller 90 (see Fig. 1) which is provided at the front upper part of the chassis 24. A pair of upper rollers 90 may be provided at the opposite sides of the chassis 24. For example, cam followers are used as the upper rollers 90. In the present exemplary embodiment, the upper rollers 90 are provided in the apex portion of the inclined upper bumper 82. For this reason, when loading the battery-equipped carriage 12, the chassis 24 of which is inclined such that the front part of the chassis 24 is positioned to be higher than the rear part of the chassis 24, the upper rollers 90 roll on the guide plates 84 so as to guide the chassis 24 such that the chassis 24 can be easily loaded into the storage 20.

In addition, the battery-equipped carriage 12 includes lower rollers (92, 94, 96) (see Fig. 1) which are provided at the rear lower part of the chassis 24 from the upper rollers 90. The lower rollers (92, 94, 96) are arranged in pairs, respectively, and provided at the opposite sides of the chassis 24. For example, cam followers are used as the lower rollers (92, 94, 96). As will be described below, the front wheel caster 26 is retracted while the battery-equipped carriage 12 is loaded into the storage 20, and the chassis 24 is turned from the state of being inclined with respect to the ground G to the state of being placed in parallel with the ground G (the state of being placed in parallel with the floor surface 20a of the storage 20). For this reason, the lower rollers (92, 94, 96) are provided at predetermined positions.

In the present exemplary embodiment, the lower rollers 92 (lower front rollers) are provided in the vicinity of the front side from the first contact portion 70a of the switching lever 70 in the state in which the battery-equipped carriage 12 is disposed on the ground G. In addition, the lower rollers 94 (lower center rollers) are provided in the vicinity of the front side from the rod 34 in the state in which the battery-equipped carriage 12 is disposed on the ground G. In addition, the lower rollers 96 (lower rear rollers) are provided in the rear side from the lower rollers (92, 94). The lower rollers (92, 94, 96) roll on the floor surface 20a of the storage 20 such that the battery-equipped carriage 12 can be smoothly loaded into or unloaded from the storage 20.

In addition, the battery-equipped carriage 12 includes an opening and closing plate 42 (Fig. 7 illustrates an opened state O and a closed state C) which is provided in the rear part of the chassis 24 and opens and closes the opening of the storage 20 of the battery-driven machine 14. In the state O in which the opening and closing plate 42 is opened, the operator may perform the connection of the plug 58 of the battery-equipped carriage 12 with the electric outlet 22 in the storage 20. In addition, in the state C in which the opening and closing plate 42 is closed, it is possible to prevent gravel and the like from entering the storage 20 and to protect electric components such as the electric outlet 22 in the storage 20. Further, in the state C in which the opening and closing plate 42 is closed, a locking unit (not illustrated), which is provided on the opening and closing plate 42, may be locked on the battery-driven machine 14 (around the opening of the storage 20) such that the opening and closing plate 42 is not opened.

In addition, as illustrated in Figs. 9A, 9B, 10A, and 10B, the battery-equipped carriage 12 includes a locking unit 66 (e.g., a pin) which is provided in the rear part of the chassis 24 and may be advanced from or retracted to the chassis 24, and a lever 100 which is connected to the locking unit 66 so as to advance and retract the locking unit 66 while moving up and down. The locking unit 66 is advanced from the chassis 24 in the state in which the lever 100 is moved up, and the locking unit 66 is retracted to the chassis 24 in the state in which the lever 100 is moved down. The locking unit 66 is inserted into a hole (not illustrated) provided in the floor surface 20a of the storage 20 such that the battery-equipped carriage 12 is locked in the storage 20.

By the way, a contact portion 42a, which comes into contact with the locking unit 66, is provided on the opening and closing plate 42. For this reason, the opening and closing plate 42 is closed in the state in which the locking unit 66 is advanced, and the locking unit 66 comes into contact with the opening and closing plate 42 (contact portion 42a) in the state in which the locking unit 66 is retracted such that the opening and closing plate 42 is not closed. That is, the battery-equipped carriage 12 includes a fail-safe mechanism in which the opening and closing plate 42 is not closed when the locking of the locking unit 66 is forgotten. The battery-equipped carriage 12 can be safely mounted in the battery-driven machine 14 by the fail-safe mechanism.

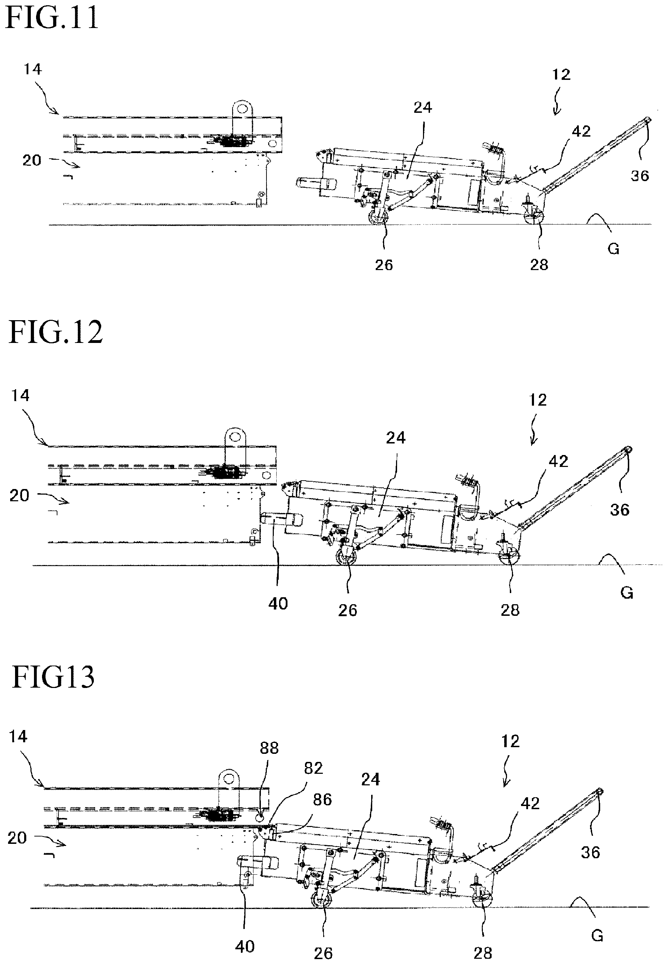

Next, the operation of the battery-equipped carriage 12 will be described with reference to the drawings. Figs. 11 to 20 are explanatory views illustrating the operation of the battery-equipped carriage 12. As the battery-equipped carriage 12 is loaded into the storage 20 in the battery-driven machine 14, the battery-equipped carriage 12, that is, the battery unit 18 (battery 48) is mounted in the battery-driven machine 14. As the battery-equipped carriage 12 is unloaded from the storage 20 in the battery-driven machine 14, the battery-equipped carriage 12, that is, the battery unit 18 (battery 48) is unloaded from the battery-driven machine 14. Hereinafter, as the operation of the battery-equipped carriage 12, the operation of moving the battery-equipped carriage 12 forward toward the battery-driven machine 14 and loading the battery-equipped carriage 12 into the battery-driven machine 14 will be described. Further, the description of the operation of moving the battery-equipped carriage 12 rearward and unloading the battery-equipped carriage 12 from the battery-driven machine 14 will be omitted because this operation is performed in the reverse order to the operation of loading the battery-equipped carriage 12.

First, the battery-equipped carriage 12 illustrated in Fig. 11 is disposed on the ground G through the front wheel caster 26 and the rear wheel casters 28. The battery-equipped carriage 12 is configured such that the front part of the chassis 24 is positioned to be higher than the rear part of the chassis 24 with respect to the ground G, thereby causing the chassis 24 to be inclined. In addition, in the battery-equipped carriage 12, the opening and closing plate 42 is opened. In addition, the battery-driven machine 14 illustrated in Fig. 11 is disposed on the ground G through the crawler 16 (not illustrated in Fig. 11). In the battery-driven machine 14, the storage 20 is disposed at a position higher than the ground G.

Subsequently, as illustrated in Fig. 12, the battery-equipped carriage 12 is moved forward. In this case, for example, when the operator holds the handle 36 and pushes the battery-equipped carriage 12 toward the storage 20 of the battery-driven machine 14, the battery-equipped carriage 12 is moved forward in the state in which the front wheel caster 26 and the rear wheel casters 28 are in contact with the ground G. Therefore, the bumper 40, which is the foremost portion of the battery-equipped carriage 12, reaches the opening of the storage 20 of the battery-driven machine 14. Further, since the bumper 40 has a shape narrowed at the side of the storage 20, the bumper 40 can be easily guided to the storage 20 even if the bumper 40 is in contact with the opening of the storage 20.

Subsequently, as illustrated in Fig. 13, for example, the battery-equipped carriage 12 is further moved forward by pushing the handle 36. Therefore, the upper bumper 82 of the battery-equipped carriage 12 reaches the upper guide 88 of the battery-driven machine 14. In this case, typically, the guard slider 86 of the battery-equipped carriage 12 and the upper guide 88 do not come into contact with each other because there is a gap between the guard slider 86 of the battery-equipped carriage 12 and the upper guide 88. However, for example, when the operator loads the battery-equipped carriage 12 in the state in which the battery-equipped carriage 12 is excessively inclined, the guard slider 86 comes into contact with the upper guide 88 such that the battery-equipped carriage 12 is guided to be loaded into the storage 20.

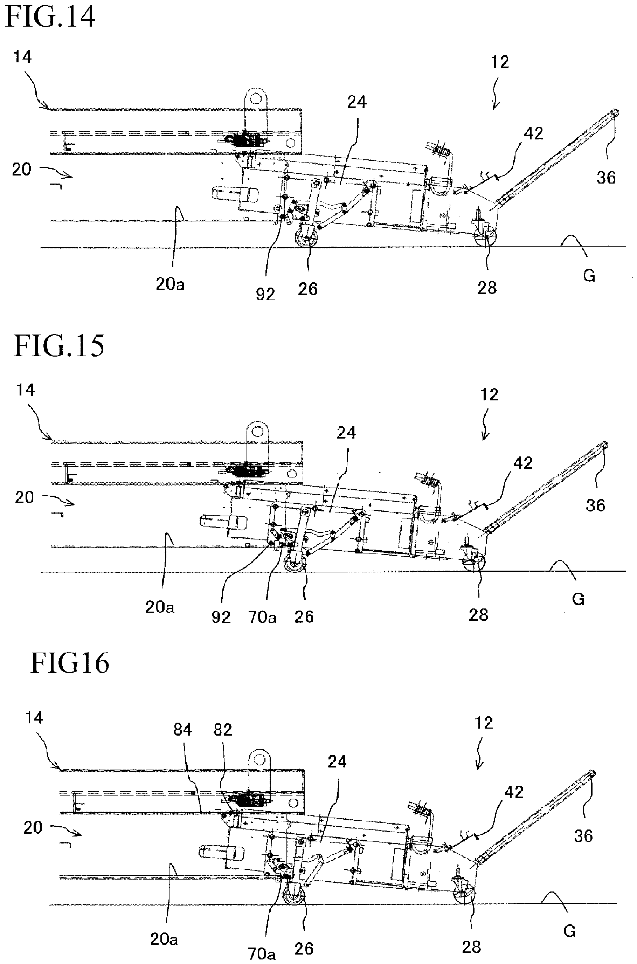

Subsequently, as illustrated in Fig. 14, for example, the battery-equipped carriage 12 is further moved forward by pushing the handle 36. Therefore, the lower rollers 92 (e.g., cam followers) of the battery-equipped carriage 12 reach the storage 20 to be capable of coming into contact with (being placed on) the floor surface 20a of the storage 20.

Subsequently, as illustrated in Fig. 15, for example, the battery-equipped carriage 12 is further moved forward by pushing the handle 36. Therefore, the contact portion 70a of the switching lever 70 comes into contact with the edge of the floor surface of the storage 20. The wheel advancing and retracting mechanism 64, which advances the front wheel caster 26 from the chassis 24, is unlocked by the switching lever 70.

Subsequently, as illustrated in Fig. 16, for example, the battery-equipped carriage 12 is further moved forward by pushing the handle 36. Therefore, the upper bumper 82 of the inclined battery-equipped carriage 12 reaches the guide plate 84 of the battery-driven machine 14. In addition, the contact portion 70a of the switching lever 70 begins to be pushed by the edge of the floor surface of the storage 20, and the front wheel caster 26 begins to be retracted (stored).

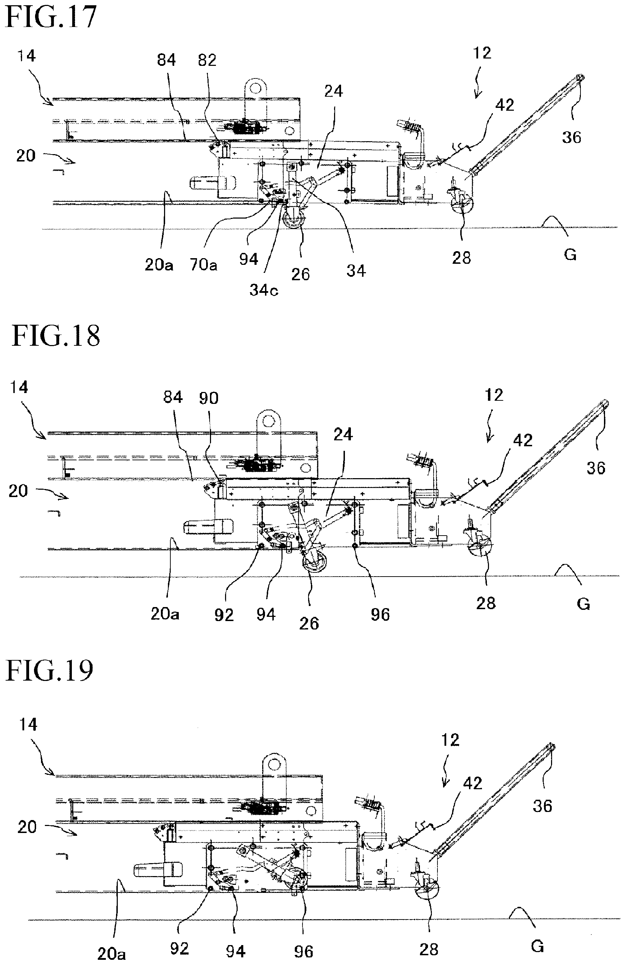

Subsequently, as illustrated in Fig. 17, the battery-equipped carriage 12 is further moved forward. In this case, for example, the operator holds the handle 36 and pushes the battery-equipped carriage 12 toward the storage 20 of the battery-driven machine 14. As a result, the battery-equipped carriage 12 is moved forward in the state in which the rear wheel caster 28 floats. Therefore, the upper bumper 82 of the battery-equipped carriage 12 is moved onto the guide plate 84 of the battery-driven machine 14. In addition, the lower rollers 94 (e.g., cam followers) of the battery-equipped carriage 12 reach the storage 20, and the lower rollers 94 come into contact with (are placed on) the floor surface 20a of the storage 20. In addition, the contact portion 70a of the switching lever 70 comes into contact with the floor surface 20a from the edge of the floor surface of the storage 20, and the second contact portion 34c of the rod 34 comes into contact with the edge of the floor surface of the storage 20.

Subsequently, as illustrated in Fig. 18, for example, the battery-equipped carriage 12 is further moved forward by pushing the handle 36. Therefore, the upper rollers 90 (e.g., cam followers) of the battery-equipped carriage 12 come into contact with (move onto) the guide plate 84. In addition, the second contact portion 34c of the rod 34 begins to be pushed by the edge of the floor surface of the storage 20, and the front wheel caster 26 begins to be lifted up from the ground G.

Subsequently, as illustrated in Fig. 19, for example, the battery-equipped carriage 12 is further moved forward by pushing the handle 36. Therefore, the lower rollers 96 (e.g., cam followers) of the battery-equipped carriage 12 reach the storage 20, and the lower rollers 96 come into contact with (are placed on) the floor surface 20a of the storage 20. In this case, a center of gravity of the battery-equipped carriage 12 is positioned in the vicinity of the lower rollers 96, and as a result, the chassis 24, which is inclined rearward with respect to the floor surface 20a of the storage 20, is maintained horizontally, and the lower rollers 92 positioned at the front lower part of the chassis 24 also come into contact with the floor surface 20a of the storage 20.

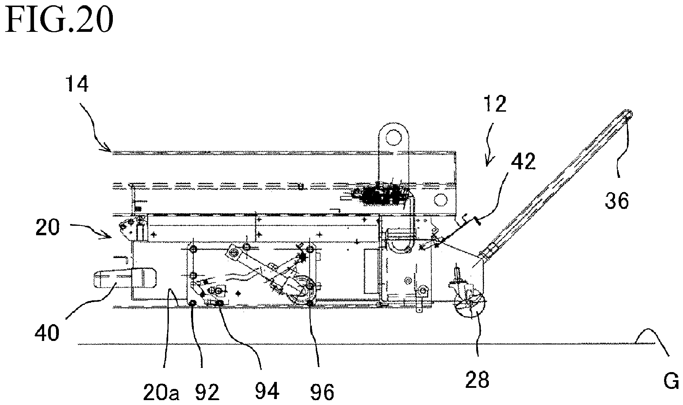

Subsequently, as illustrated in Fig. 20, for example, the battery-equipped carriage 12 is further moved forward by pushing the handle 36. Therefore, the stopper plate 106 of the battery-equipped carriage 12 comes into contact with the stop unit 102 in the storage 20, and the battery-equipped carriage 12 is stopped in the storage 20 (see Fig. 7). Subsequently, as described with reference to Figs. 9A, 9B, 10A, and 10B, the locking unit 66 is advanced from the chassis 24 by moving the lever 100 upward, and the battery-equipped carriage 12 is locked in the storage 20. Subsequently, the opening and closing plate 42 of the battery-equipped carriage 12 is closed, and as a result, the operation of mounting the battery-equipped carriage 12 (battery unit 18, battery 48) into the battery-driven machine 14 is completed. According to the battery-equipped carriage 12, the battery 48 (battery unit 18) can be easily mounted in the battery-driven machine 14.

While the present invention has been specifically described above with respect to an exemplary embodiment, the present invention is not limited to the exemplary embodiment, and may be variously modified without departing from the gist of the present invention.

For example, in the exemplary embodiment, the configuration in which the chassis is inclined with respect to the ground by using the rod such that the front part of the chassis is positioned to be higher than the rear part of the chassis has been described. The present invention is not limited thereto, and the chassis may be inclined by making the diameter of the front wheel greater than the diameter of the rear wheel.

In addition, for example, in the exemplary embodiment, the configuration in which the rod mounted on the wheel (front wheel caster) is rotated has been described as the wheel advancing and retracting mechanism. The present invention is not limited thereto, and the rod may be extended and retracted, or the wheel may be advanced and retracted.

## Claims

1. A battery-equipped carriage which is loaded into or unloaded from a storage in a battery-driven machine, the battery-equipped carriage comprising:
a chassis; and
a front wheel and a rear wheel which respectively support a front part and a rear part of the chassis with respect to a ground,
wherein the front part of the chassis is positioned to be higher than the rear part of the chassis with respect to the ground such that the chassis is inclined.

2. The battery-equipped carriage according to claim 1, further comprising:
a wheel advancing and retracting mechanism which retracts the front wheel to the chassis when the battery-equipped carriage is loaded into the storage in the battery-driven machine, and advances the front wheel from the carriage when the battery-equipped carriage is unloaded from the storage of the battery-driven machine.

3. The battery-equipped carriage according to claim 2, wherein the wheel advancing and retracting mechanism is provided with a rod having a first end and a second end,
wherein the first end of the rod is mounted on the front wheel, and the second end of the rod is rotatably mounted on the chassis, and
wherein, in a state in which the front wheel is advanced from the chassis, the front part of the chassis is positioned to be higher than the rear part of the chassis with respect to the ground by the rod extending from the chassis such that the chassis is inclined with respect to the ground.

4. The battery-equipped carriage according to claim 3, wherein the wheel advancing and retracting mechanism further includes a link unit, a switching lever, and a torsion spring,
wherein the link unit has a third end, a fourth end, and a fifth end,
wherein a center of the switching lever is rotatably mounted at a lower side of the front part of the chassis from the second end of the rod,
wherein the switching lever and the rod respectively have a first contact portion and a second contact portion which come into contact with an edge of a floor surface of the storage when the battery-equipped carriage is loaded into the storage,
wherein the third end of the link unit is rotatably mounted on the rear side of the chassis from the second end of the rod, the fourth end of the link unit is rotatably mounted on the front wheel, and the fifth end of the link unit is rotatably mounted on the switching lever, and
wherein the torsion spring is provided at a position where the third end of the link unit is mounted, and the torsion spring is disposed between the link unit and the chassis so as to urge the link unit toward the rear part of the chassis with respect to the chassis.

5. The battery-equipped carriage according to any one of claims 1 to 4, further comprising:
a bumper which protrudes from opposite sides of the chassis and is narrowed from the opposite sides toward a foremost portion.

6. The battery-equipped carriage according to any one of claims 1 to 5, further comprising:
an upper bumper which is provided at a front upper part of the chassis and inclined downward from the upper part to the front part.

7. The battery-equipped carriage according to any one of claims 1 to 6, further comprising:
an upper roller provided at a front upper part of the chassis; and
a lower roller which is provided at a rear lower part of the chassis from the upper roller.

8. The battery-equipped carriage according to any one of claims 1 to 7, further comprising:
an opening and closing plate provided at the rear part of the chassis so as to open and close an opening of the storage; and
a locking unit provided at the rear part of the chassis to be advanced from and retracted to the chassis,
wherein, in a state where the locking unit is advanced, the opening and closing plate is closed, and in the state where the locking unit is retracted, the locking unit comes into contact with the opening and closing plate such that the opening and closing plate is not closed.

9. The battery-equipped carriage according to any one of claims 1 to 8, further comprising:
a handle detachably provided at the rear part of the chassis; and
a handle accommodating section provided at a side part of the chassis so as to accommodate the handle detached from the chassis.

10. The battery-equipped carriage according to any one of claims 1 to 9, wherein the number of rear wheels is one and the rear wheel supports a center of the rear part of the chassis.

11. A battery-driven machine comprising a storage configured such that the battery-equipped carriage according to any one of claims 1 to 10 is loaded thereinto and unloaded therefrom.
